# EUROPEAN PATENT SPECIFICATION

(11) **EP 0 687 621 B1**
(45) Date of publication and mention of the grant of the patent: **24.04.2002**
(21) Application number: 95109047.1
(22) Date of filing: 12.06.1995
(51) Int. Cl.: B60T 8/26, B62L 3/08

(54) **Brake system for motorcycles**
Bremssystem für Motorräder
Système de freinage pour motocyclettes

(30) Priority: 14.06.1994 JP 13182494
(43) Date of publication of application: 20.12.1995
(73) Proprietor: HONDA GIKEN KOGYO KABUSHIKI KAISHA, Minato-ku, Tokyo (JP)
(72) Inventor: Toyoda, Hidetoshi, 4-1, Chuo 1-chome, Wako-shi, Saitama (JP); Tsuchida, Tetsuo, 4-1, Chuo 1-chome, Wako-shi, Saitama (JP); Iwashita, Kanau, 4-1, Chuo 1-chome, Wako-shi, Saitama (JP)
(74) Representative: Liska, Horst, Dr.-Ing.

(56) References cited:
- EP-A- 0 025 101
- US-A- 5 219 211
- PATENT ABSTRACTS OF JAPAN vol. 005, no. 010 (M-051), 22 January 1981 & JP 55 140637 A (YAMAHA MOTOR CO LTD), 4 November 1980,
- PATENT ABSTRACTS OF JAPAN vol. 018, no. 136 (M-1572), 7 March 1994 & JP 05 319348 A (HONDA MOTOR CO LTD), 3 December 1993,

## Description

### Detailed Description of the Invention

### Field of Industrial Application

The present invention relates to a brake system for a motorcycle, in which a common master cylinder is connected with a front wheel brake to be mounted on a front wheel and a rear wheel brake to be mounted on a rear wheel.

### Prior Art

In the prior art, such brake system is already known in Japanese Patent Laid-Open No. 319348/1993, for example.

US-A-5 219 211 discloses a brake system in which a common master cylinder for generating a liquid pressure by depressing a brake pedal is directly connected with a first and second front wheel brake and a rear wheel brake and an output liquid pressure of the master cylinder acts directly upon the first and second front wheel brake.

### Problems sought to Be Solved by the Invention

In the aforementioned prior art, it has been usual that the master cylinder for generating a liquid pressure by depressing a brake pedal is connected with the front wheel brake and the rear wheel brake, and the output liquid pressure of the master cylinder acts directly upon the front wheel brake. As a result, the front wheel is excessively braked to raise the motorcycle body even if the brake pedal is depressed relatively weakly for adjusting the running speed while the motorcycle is turning, so that the braking force to be distributed to the front wheel cannot be increased.

It is therefore an object of the invention to provide a brake system for a motorcycle which prevents excessive braking of the front wheel when the brake pedal is actuated for adjusting the running speed.

This object is achieved by the features of claim 1. According to the invention, there is provided a brake system for a motorcycle, comprising first and second master cylinders wherein the first master cylinder is connected with a first and a second front wheel brake to be mounted on a front wheel and the second master cylinder is connected with the first and second front wheel brake to be mounted on the front wheel and with a rear wheel brake to be mounted on a rear wheel, characterized in that the first front wheel brake is directly connected with the second master cylinder and the second front wheel brake is connected with the second master cylinder through pressure control means for transmitting an output liquid pressure of the second master cylinder only when the output liquid pressure of the second master cylinder exceeds a predetermined level, so that a liquid pressure distribution ratio at the front wheel side is changed.

According to the invention as set forth in Claim 2, in addition to the construction of the invention as set forth in Claim 1, the pressure control means switches between a state in which it intercepts the liquid pressure transmission when the output liquid pressure of the second master cylinder is lower than a predetermined level, and a state in which it transmits a liquid pressure when the output liquid pressure of the second master cylinder is equal to or higher than the predetermined level.

According to the invention as set forth in Claim 3, in addition to the construction of the invention as set forth in Claim 1 or 2, the first front wheel brake is connected to the first master cylinder for establishing a liquid pressure by a brake reaction to be established in response to the action of said front wheel brake and the first master cylinder is connected with the rear wheel brake.

### Brief Description of the Drawings

Fig. 1
   A top plan view of the motorcycle equipped with the brake system according to the present invention.
Fig. 2
   A diagram of the entire construction of the brake system.
Fig. 3
   A longitudinal section of the secondary master cylinder.
Fig. 4
   A longitudinal section of the pressure-reducing device.
Fig. 5
   A pressure-reducing characteristic diagram of the pressure-reducing device.
Fig. 6
   A longitudinal section of the pressure control means.

### Embodiment

The present invention will be described in the following in connection with its embodiment with reference to the accompanying drawings.

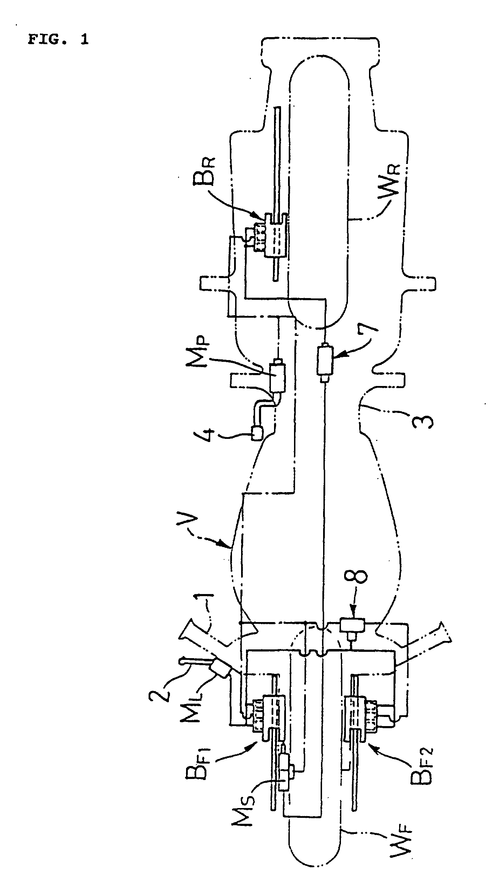

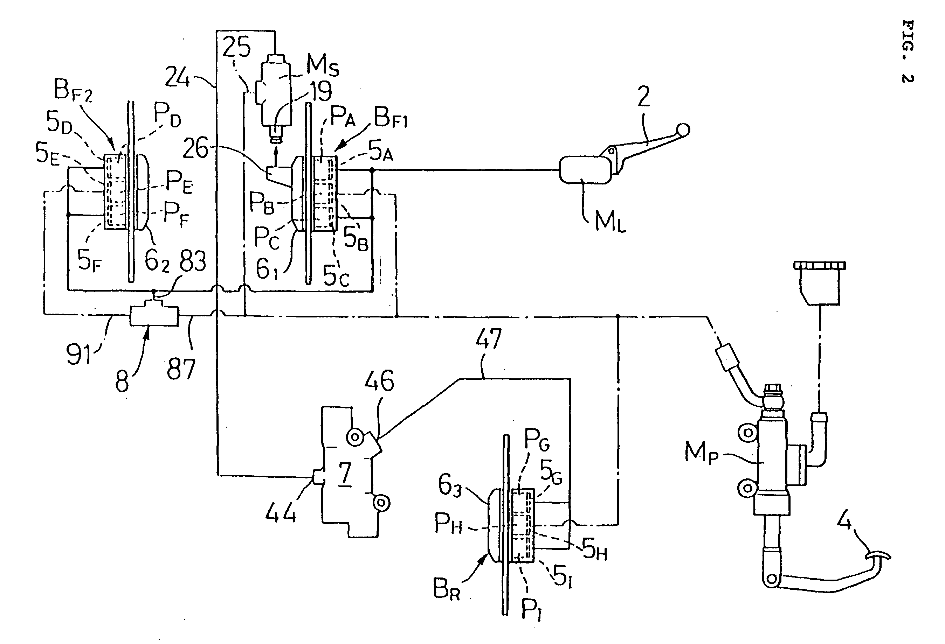

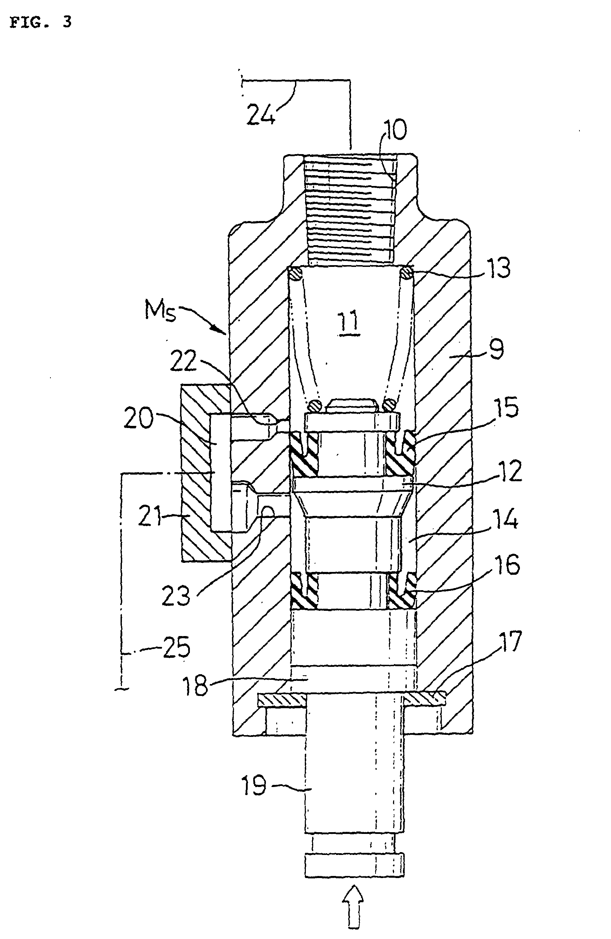

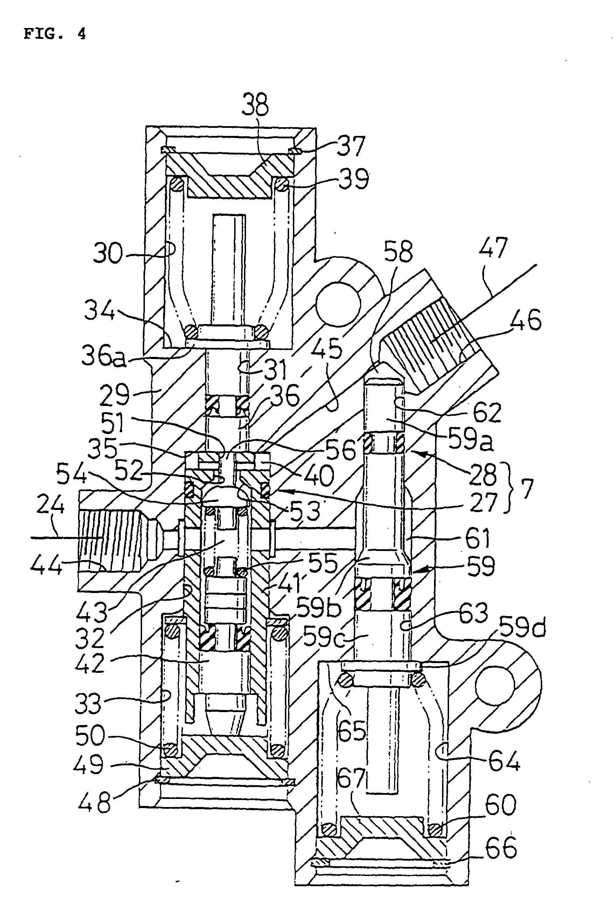

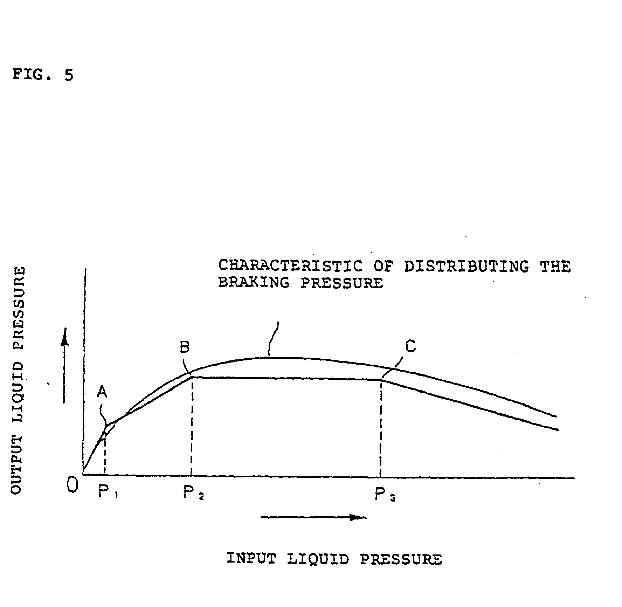

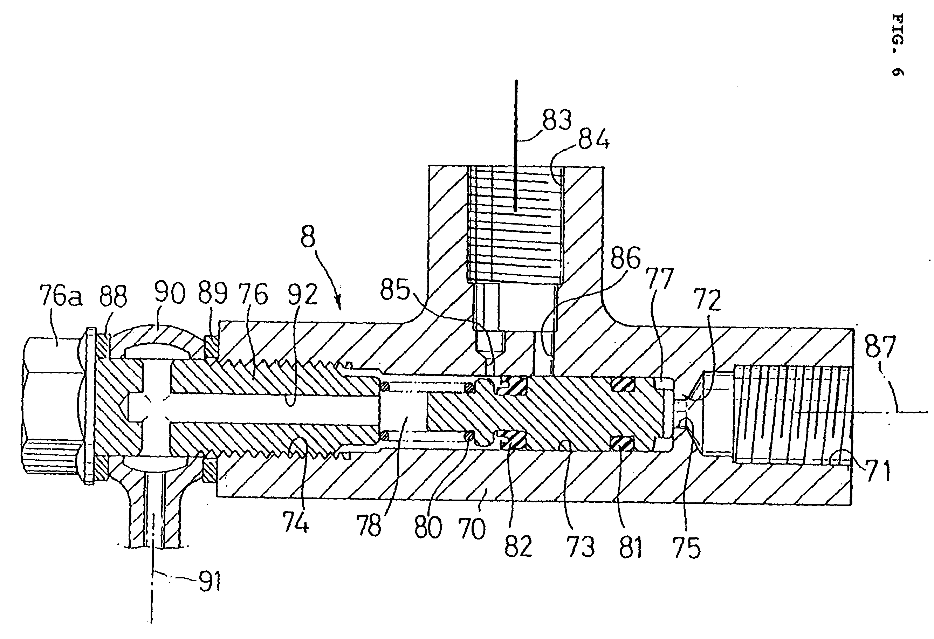

Figs. 1 to 6 show one embodiment of the present invention wherein Fig. 1 is a top plan view of a motorcycle equipped with a brake system according to the present invention Fig. 2 is a diagram of the entire construction of the brake system Fig. 3 is a longitudinal section of a secondary master cylinder Fig. 4 is a longitudinal section of a pressure-reducing device Fig. 5 is a diagram of the pressure-reducing characteristics of the pressure-reducing device and Fig. 6 is a longitudinal section of pressure control means.

With first reference to Figs. 1 and 2, a first front wheel brake B_{F1} and a second front wheel brake B_{F2} are respectively mounted on the righthand and lefthand sides of a front wheel W_{F} in a motorcycle V, and a rear wheel brake B_{R} is mounted on the righthand side of a rear wheel W_{R}. On the righthand end portion of a steering handle 1, on the other hand, there is mounted a primary master cylinder M_{L} for outputting a liquid pressure according to the actuation of a brake lever 2. On the longitudinal central portion of a body frame 3, there is mounted a second master cylinder M_{P} for outputting a liquid pressure according to the depression of a brake pedal 4. Thus, when the brake lever 2 is solely actuated while the brake pedal 4 is left unactuated, the first and second front wheel brakes B_{F1} and B_{F2} and the rear wheel brake B_{R} are operated by the liquid pressure outputted from the primary master cylinder M_{L}. When, on the other hand, the brake pedal 4 is solely actuated while the brake lever 2 is left unactuated, the first front wheel brake B_{F1} and the rear wheel brake B_{R} are operated, but the second front wheel brake B_{F2} is not operated when the actuating force of the brake pedal 4 is relatively low but is operated when the actuating force of the brake pedal 4 is relatively high.

The first front wheel brake B_{F1} is a disc brake which is slidably fitted in a caliper 6 with the rear piston P_{A}, a central piston P_{B} and a rear piston P_{C} in a caliper 6₁ while having surfaces of its central piston P_{B} and rear piston P_{C} confronting liquid pressure chambers 5_{A}, 5_{B} and 5_{C}, respectively. Likewise the second front wheel brake B_{F2} is a disc brake which is slidably fitted in a caliper 6₂ with the rear surfaces of its front piston P_{D}, central piston P_{E} and rear piston P_{F} confronting liquid pressure chambers 5_{C}, 5_{E} and 5_{F}, respectively. The rear wheel brake B_{R} is a disc brake which is slidably fitted in a caliper 6₃ with its front piston P_{G}, central piston P_{H} and rear piston P₁ confronting liquid pressure chambers 5_{G}, 5_{H} and 5_{I}, respectively.

The primary master cylinder M_{L} is connected directly with the liquid pressure chambers 5_{A} and 5_{B} of the first front wheel brake B_{F1} and directly to the liquid pressure chambers 5_{D} and 5_{F} of the second front wheel brake B_{F2}. On the other hand, the first front wheel brake B_{F1} is equipped with a secondary master cylinder M_{S} for generating a liquid pressure by the brake reaction which is generated according to the action of the first front wheel brake B_{F1}. This secondary master cylinder M_{S} is connected through a pressure-reducing device 7 to the liquid pressure chambers 5_{G} and 5_{I} of the rear wheel brake B_{R}. Moreover, the second master cylinder M_{P} is connected directly with the liquid pressure chamber 5_{H} of the rear wheel brake B_{R} and the liquid pressure chamber 5_{B} of the first front wheel brake B_{F1} and through pressure control means 8 with the liquid pressure chamber 5_{E} of the second front wheel brake B_{F2}.

With additional reference to Fig. 3, the secondary master cylinder M_{S} has its cylinder body 9 formed into such a bottomed cylindrical shape having an output port 10 in its one closed end. In this cylinder body 9, there is slidably fitted a piston 12 to define an output liquid pressure chamber 11 leading to the output port 10 between the closed end portion of the cylinder body 9 and one end of the piston 12. In the output liquid pressure chamber 11 between one end of the cylinder body 9 and the piston 12, there is compressed a return spring 13 for urging the piston 12 in the direction to increase the volume of the output liquid pressure chamber 11.

The piston 12 has its intermediate portion radially reduced at its outer circumference to form an annular chamber 14 between itself and the inner circumference of the cylinder body 9. On the outer circumference of the piston 12, there are fitted first and second cup seals 15 and 16 which define the annular chamber 14 therebetween. The first cup seal 15, as located between the annular chamber 14 and the output liquid pressure chamber 11, is in sliding contact with the inner circumference of the cylinder body 9 to permit communication of the working liquid from the annular chamber 14 to the output liquid pressure chamber 11 but obstruct the communication of the working liquid from the output liquid pressure chamber 11 to the annular chamber 14 when the pressure in the output liquid pressure chamber 11 is lower than that in the annular chamber 14. The second seal 16 is in sliding contact with the inner circumference of the cylinder body 9 to obstruct the communication of the working liquid with the side opposite to the output liquid pressure chamber 11.

In the other open end of the cylinder body 9, there is fitted a stop ring 17, by which is slidably fitted a disc-shaped push plate 18 in the cylinder body 9 while being obstructed from coming out. The push plate 18 is in coaxial contact with the other end of the piston 12. From the push plate 18, moreover, there is coaxially and integrally extended a rod 9 which extends away from the piston 12.

On the outer circumference of the cylinder body 9, there is fixed a cover 21 for forming a reserving chamber 20 between itself and the outer circumference of the cylinder body 9. This cylinder body 9 is formed in its side wall with a primary port 22 for opening the output liquid pressure chamber 11 into the reserving chamber 20 when the piston 12 is in the position to maximize the volume of the output liquid pressure chamber 11, as shown in Fig. 3 and a secondary port 23 for communicating the annular chamber 14 with the reserving chamber 20 at all times.

Incidentally, the caliper 6₁ of the first front wheel brake B_{F1} is equipped, as shown in Fig. 2, with a connection arm 26 which is associated and connected to the rod 19. By the brake reaction acting upon the caliper 6₁ at the braking time of the first front wheel brake B_{F1}, the connection arm 24 acts to push the rod 19 upward so that the piston 12 acts in the direction to reduce the volume of the output liquid pressure chamber 11. Thus, the piston 12 reduces the volume of the output liquid pressure chamber 11, even after the first cup seal 15 passes the primary port 22 to intercept the communication between the reserving chamber 20 and the output liquid pressure chamber 11, so that the liquid pressure is outputted from the output liquid pressure chamber 11, i.e., the output port 10. This output port 10 is connected through a conduit 24 with the pressure-reducing device 7, and a conduit 25 connected with the reserving chamber 20 is connected with the liquid pressure chamber 5_{H} of the rear wheel brake B_{R} and the second master cylinder M_{P}.

In Fig. 4, the pressure-reducing device 7 is equipped with a proportional pressure-reducing valve 27 and pressure-reducing means 28. The proportional pressure-reducing valve 27 has its housing 29 formed with a first spring housing hole 30 having its one end opened a first sliding hole 31 radially reduced from the first spring housing hole 30 and having its one end coaxially leading to the other end of the first spring housing hole 30 a second sliding hole 32 radially enlarged from the first sliding hole 31 and having its one end coaxially leading to the other end of the first sliding hole 31 and a second spring housing hole 33 radially enlarged from the second sliding hole 32 and having its one end coaxially leading to the other end of the second sliding hole 32 and its other end opened.

In the first sliding hole 31, there is liquid-tight and slidably fitted a regulation piston 36 which is formed at its intermediate portion with such a flanged portion 36a as can abut against a stepped portion 34 between the first spring housing hole 30 and the first sliding hole 31. A regulation spring 39 is compressed between the aforementioned flanged portion 36a and a spring receiving member 38 which is supported by a stop ring 37 fitted in the open end portion of the first spring housing hole 30. Thus, the end face of the regulation piston 36 at the side of the second sliding hole 32 is flush with a stepped portion 35 between the first and second sliding holes 31 and 32 when the flanged portion 36a is in abutment against the stepped portion 34.

In the second sliding hole 32, there is slidably fitted a pressure-receiving piston 41 for forming an output liquid pressure chamber 40 between itself and the stepped portion 35. On the pressure-receiving piston 41, moreover, there is liquid-tight and relatively slidably a spring receiving piston 42 to define an input liquid pressure chamber 43 between the pressure-receiving piston 41 and the spring receiving piston 42. Thus, the housing 29 is formed with an input port 44, with which is connected the conduit 24 leading to the secondary master cylinder M_{S}. The input port 44 is made to communicate with the input liquid pressure chamber 43. On the other hand, the housing 29 is formed with an output port 46 which is in communication with the output liquid pressure chamber 40 via a liquid pressure passage 45, and a conduit 47 connected with the output port 46 is connected with the liquid pressure chambers 5_{G} and 5_{I} of the rear wheel brake B_{R}, as shown in Fig. 2.

In the open end portion of the second spring housing hole 33, there is fitted a stop ring 48. This stop ring 48 supports a receiving member 49, against which abuts the end portion of the spring receiving piston 42 at the side opposite to the input liquid pressure chamber 43, to compress a pressure-regulating spring 50 between the receiving member 49 and the pressure-receiving piston 41. Moreover, the pressure-receiving piston 41 is made axially shorter than the distance between the stepped portion 35 and the receiving member 49 so that the pressure-receiving piston 42 can axially reciprocate between the stepped portion 35 and the receiving member 49.

The end portion of the pressure-receiving piston 41 at the side of the output liquid pressure chamber 40 is axially formed with a guide hole 51 and a valve hole 52 leading to the output liquid pressure chamber 40 and is formed with a tapered valve seat 53 which has the valve hole 52 opened at its central portion to face the input liquid pressure chamber 43. In this input liquid pressure chamber 43, on the other hand, there is housed a valve body 54 which can be seated on the valve seat 53 to compress a closing spring 55 between the valve body 54 and the spring receiving piston 4 2. From the valve body 54, moreover, there is integrally protruded a valve opening rod 56 which is loosely fitted in the valve hole 52 and slidably fitted in the guide hole 51. The valve opening rod 56 is in abutment against the regulation piston 36.

The pressure-reducing means 28 shares the housing 29 with the proportional pressure-reducing valve 27 and is equipped with: a stepped pressure-reducing piston 59 which is slidably fitted in the housing 29 while having its one end facing a liquid chamber 58 formed midway of the liquid pressure passage 45 joining the output liquid pressure chamber 40 of the proportional pressure-reducing valve 27 and the output port 46; and a spring 60 for urging the pressure- reducing piston 59 to the side to reduce the volume of the liquid chamber 58. Between the outer circumference of the intermediate portion of the pressure-reducing piston 59 and the housing 29, there is formed an annular liquid pressure chamber 61 for applying the liquid pressure at the side to increase the volume of the liquid chamber 58 to the pressure-reducing piston 59.

The housing 29 is formed with a smaller-diameter sliding hole 62 having its one end leading to the liquid chamber 58 a larger-diameter sliding hole 63 radially enlarged from the smaller-diameter sliding hole 62 and having its one end coaxially leading to the other end of the smaller-diameter sliding hole 62 and a third spring housing hole 64 radially enlarged from the larger-diameter sliding hole 63 and having its one end coaxially leading to the other end of the larger-diameter sliding hole 62 and its other end opened. Moreover, the pressure-reducing piston 59 is formed with a smaller-diameter portion 59a which is liquid-tight and slidably fitted in the smaller-diameter sliding hole 62 while having its one end facing the liquid chamber 58 and a larger-diameter portion 59c which is liquid-tight and slidably fitted in the larger-diameter sliding hole 63 and which coaxially leads through a tapered pressure-receiving stepped portion 59b to the aforementioned smaller-diameter portion 59b. The annular liquid pressure chamber 61 is formed between the stepped portion between the smaller-diameter sliding hole 62 and the larger-diameter sliding hole 63 and the pressure-receiving stepped portion 59b of the pressure-reducing piston 59 and is made to communicate with the input port 44.

The pressure-reducing piston 59 is formed with a flanged portion 59d which can abut against a stepped portion 65 between the larger-diameter sliding hole 63 and the third spring housing hole 64. The spring 60 is compressed between the aforementioned flanged portion 59d and a spring receiving member 67 which is supported by a stop ring 66 fitted in the open end portion of the third spring housing hole 64.

The pressure-reducing device 7 thus constructed has pressure-reducing characteristics, as illustrated in Fig. 5. Specifically, the proportional pressure- reducing valve 27 is left opened before the liquid pressure inputted to the input port 24 reaches level P₁, so that the output liquid pressure from the output port 46 increases in proportion to the input liquid pressure, as indicated by a straight line joining point 0 and point A.

When the input liquid pressure rises to exceed the level P₁, the pressure-receiving piston 41 of the proportional pressure-reducing valve 27 is moved to the side to increase the volume of the output liquid pressure chamber 40 against the spring force of the pressure-regulating valve 50 so that the valve body 54 is seated on the valve seat 53 to intercept the communication between the input liquid pressure chamber 43 and the output liquid pressure chamber 40. As the liquid pressure of the input liquid pressure chamber 43, i.e., the input liquid pressure further rises, the pressure-receiving piston 41 moves to the side to reduce the volume of the output liquid pressure chamber 40 so that the valve body 54 leaves the valve seat 53 to restore the communication between the input liquid pressure chamber 43 and the output liquid pressure chamber 40. Thus, the pressure-receiving piston 41 axially reciprocates according to the rise of the input liquid pressure to open and close the valve hole 52 interruptedly, so that the rising rate of the output liquid pressure decreases, as indicated by a straight line joining point A and point B in Fig. 5.

When the input liquid pressure further rises to level P₂, the liquid pressure acting upon the regulation piston 36 having its one end facing the output liquid pressure chamber 40 overcomes the spring force of the regulation spring 39 so that the regulation piston 36 moves while compressing the regulation spring 39. As a result, the valve opening rod 56 of the valve body 54 urged by the closing spring 55 follows the axial movement of the regulation piston 36 so that the valve body 54 is seated upon the valve seat 53 to intercept the communication between the input liquid pressure chamber 43 and the output liquid pressure chamber 40. As a result, when the input liquid pressure reaches the level P₂, the output liquid pressure is held at a constant level, as indicated by a straight line jointing point B and point C in Fig. 5.

When the output liquid pressure further rises to exceed level P₃, the liquid pressure for urging the pressure-reducing piston 59 of the pressure-reducing means 28 to the side to increase the volume of the liquid chamber 58 overcomes the spring force of the spring 60, and the pressure-reducing piston 59 moves to the side to increase the volume of the liquid chamber 58 so that the output liquid pressure drops.

Thus, the characteristics of distributing the braking pressure between the front and rear wheels, as close to the ideal characteristics represented by the curve of Fig. 5, can be achieved by the pressure- reducing device 7.

As shown in Fig. 6, the pressure control means 8 has its housing 70 formed with an input port 71, a cylinder hole 73 while interposing a partition 72 between itself and the input port 71, and a threaded hole 74 coaxially in the recited order. The partition 72 is formed with a communication hole 75 coaxially joining the input port 71 and the cylinder hole 73, and a bolt 76 is driven into the threaded hole 74.

In the cylinder hole 73, there is slidably fitted a piston 79 which defines not only an input liquid pressure chamber leading through the communication hole 75 to the input 71 between itself and the partition 72 but also an output liquid pressure chamber 78 between itself and the bolt 76. Moreover, a spring 80 is compressed in the output liquid pressure chamber 78 between the bolt 76 and the piston 79.

On the outer circumference of the piston 79, there are so mounted an O-ring 81 at the side of the input liquid pressure chamber 77 and a cup seal 82 at the side of the output liquid pressure chamber 78 such that they are spaced from each other in the axial direction of the piston 79. The cup seal 82 is mounted on the piston 79 such that the working liquid between the cup seal 82 and the O-ring 81 is allowed to flow to the output liquid pressure chamber 78 in response to the drop of the liquid pressure of the output liquid pressure chamber 78.

The housing 70 is formed in its side portion with a connection hole 83 to which is connected a conduit 83 leading to the primary master cylinder M_{L} for outputting the liquid pressure in response to the actuation of the brake lever 2 and a primary port 85 and a secondary port 86 leading to the connection hole 84 and opened in the inner face of the cylinder hole 73. The primary port 85 is opened in the inner face of the cylinder hole 73 while leading to the output liquid pressure chamber 78 when the piston 79 is positioned to minimize the volume of the input liquid pressure chamber 77, as shown in Fig. 6, and the secondary port 86 is opened in the inner face of the cylinder hole 73 such that it is positioned between the O-ring 81 and the cup seal 82 independently of the axial position of the piston 79.

To the input port 71, there is connected a conduit 87 which leads to the second master cylinder M_{P} for outputting the liquid pressure in response to the actuation of the brake pedal 4. Between a head 76a of the bolt 76 and the cylinder body 70, on the other hand, there is clamped a hose mouth piece 90 so as to interposed a washer 88 between itself and the head 76a and a washer 89 between itself and the cylinder body 70. A hole 91 leading to the hose mouth piece 90 is made to communication with the output liquid pressure chamber 78 via a communication passage 91 formed in the bolt 76 and is connected with the liquid pressure chamber 5_{E} of the second front wheel brake B_{F2}, as shown in Fig. 2.

The ratio of the liquid pressure transmission by the pressure control means 8 is varied with the output liquid pressure of the second master cylinder M_{P}. Specifically, when the liquid pressure for urging the piston 79 to the side to increase the volume of the input liquid pressure chamber 77 by the liquid pressure of the input liquid pressure chamber 77 is lower than the spring force for urging the piston 79 to the side to reduce the volume of the input liquid pressure chamber 77 by the spring 80, the connection hole 84 is in a state in which it communicates with the output liquid pressure chamber 78, and in this state the liquid pressure transmission between the second master cylinder M_{P} and the liquid pressure chamber 5_{E} of the second front wheel brake B_{F2} is intercepted. When the liquid pressure of the input liquid pressure chamber 77 exceeds the predetermined level so that the liquid pressure for urging the piston 79 to the side to increase the volume of the input liquid pressure chamber 77 overcomes the spring force for urging the piston 79 to the side to reduce the volume of the input liquid pressure chamber 77, the piston 79 is moved in the direction to increase the volume of the input liquid pressure chamber 77, i.e., to reduce the volume of the output liquid pressure chamber 78 so that the liquid pressure is outputted from the output liquid pressure chamber 78 in accordance with the reduction of the volume of the output liquid pressure chamber 78. In short, when the liquid pressure of the input liquid pressure chamber 77 exceeds the predetermined level, the output liquid pressure of the second master cylinder M_{P} is transmitted through the piston 79 to the liquid pressure chamber 5_{E} of the second front wheel brake B_{F2}.

Next, the operation of this embodiment will be described. When the brake lever 2 is solely actuated, the liquid pressure generated in the primary master cylinder is applied directly to the liquid pressure chambers 5_{A} and 5_{C} of the first front wheel brake B_{F1} and the liquid pressure chambers 5_{D} and 5_{F} of the second front wheel brake B_{F2} and further to the liquid pressure chamber 5_{E} of the second front wheel brake B_{F2} to brake the front wheel W_{F}, because the connection hole 84 and the output liquid pressure chamber 78 are held in communication with each other by the pressure control means 8. Moreover, the liquid pressure to be established in the secondary master cylinder M_{S} in accordance with the braking action of the first front wheel brake B_{F1} acts upon the liquid pressure chambers 5_{G} and 5_{I} of the rear wheel brake B_{R} to brake the rear wheel W_{R} through the pressure-reducing means 7. At this time, the output liquid pressure of the secondary master cylinder M_{S} rises with the increase in the braking force of the front wheel W _{F}, the braking force close to the ideal distribution characteristics is established in the rear wheel W_{R} by the pressure-reducing characteristics of the pressure-reducing means 7, as shown in Fig. 5.

When the brake pedal 4 is solely actuated, on the other hand, the liquid pressure generated in the second master cylinder M_{P} acts upon the liquid pressure chamber 5_{H} of the rear wheel brake B_{R} and the liquid pressure chamber 5_{B} of the first front wheel brake B_{F1}. In accordance with the braking action of the first front wheel brake B_{F1}, moreover, the liquid pressure generated from the secondary master cylinder M_{S} acts on the liquid pressure chambers 5_{G} and 5_{I} of the rear wheel brake B_{R} through the pressure- reducing means 7 to brake the front wheel W_{F} and the rear wheel W_{R} individually.

Incidentally, when the liquid pressure to be outputted from the second master cylinder M_{P} is lower than the predetermined level, the liquid pressure is not transmitted to the liquid pressure chamber 5_{E} of the second front wheel brake B_{F2} by the action of the pressure control means 8 so that the second front wheel brake B_{F2} is left unactuated. When the liquid pressure to be outputted from the second master cylinder M_{P} exceeds the predetermined level, on the contrary, the pressure control means 8 transmits the liquid pressure to the liquid pressure chamber 5_{E} of the second front wheel brake B_{F2} so that the second front wheel brake B_{F2} acts to brake. Specifically, when the depression of the brake pedal 4 is less than the predetermined value, the first front wheel brake B_{F1} acts to brake, but the second front wheel brake B_{F2} does not. When the depression of the brake pedal 4 exceeds the predetermined value, both the first and second front wheel brakes B_{F1} and B_{F2} act to brake.

As a result, even if the brake pedal 4 is relatively weakly depressed for adjusting the running speed of the motorcycle V while this vehicle is turning, the front wheel W_{F} is not excessively braked. If the brake pedal 4 is relatively intensely depressed at an ordinary braking time to raise the output liquid pressure of the second master cylinder M_{P} to a relatively high level, the braking force of the front wheel W_{F} can be set to a relatively high value.

Moreover, when the brake lever 2 and the brake pedal 4 are simultaneously actuated, all the brakes B_{F1}, B_{F2} and B_{R} are actuated to brake the front wheel W_{F} and the rear wheel W_{R}.

Now, let it be assumed that the brake pedal 4 is depressed while the brake lever 2 is braking. In the pressure control means 8, the piston 79 is in the state to minimize the volume of the input liquid pressure chamber 77 till the liquid pressure for applying to the piston 79 the liquid pressure overcoming the sum of the liquid pressure by the output liquid pressure of the first master cylinder M_{L} acting in the output liquid pressure chamber 78 and the spring force of the spring 80 is outputted from the second master cylinder M_{P}. After the output liquid pressure of the second master cylinder M_{P} rises so that the piston 79 moves to close the primary port 85, the pressure control means 8 is brought into the state in which it transmits the liquid pressure between the second master cylinder M_{P} and the liquid pressure chamber 5_{E} of the second front wheel brake B_{F2}. When the brake lever 2 is actuated while the brake pedal 4 is being depressed, on the other hand, the output liquid pressure of the first master cylinder M_{L} is applied to the output liquid pressure chamber 78 by the action of the cup seal 82 when the output liquid pressure of the first master cylinder M_{L} is higher than the liquid pressure of the output liquid pressure chamber 78, even while the piston 79 is closing the primary port 85. As a result, the sum of the liquid pressure by the output liquid pressure of the first master cylinder M_{L} urges the piston 79 in the direction to reduce the volume of the input liquid pressure chamber 77, and the liquid pressure by the output liquid pressure of the second master cylinder M_{P} urges the piston 79 to the side to increase the volume of the input liquid pressure chamber 77,' so that the output liquid pressure of the first master cylinder M_{L} acts upon the liquid pressure chamber 5_{E} of the second front wheel brake B_{F2} after the piston 79 is moved so far to the side to reduce the volume of the input liquid pressure chamber 77 as to open the primary port 85 by the rise of the output liquid pressure of the first master cylinder M_{L}.

Although the present invention has been described in detail in connection with its embodiment, it should not be limited thereto but can have its design changed in various manners without departing from the invention as set forth in Claims.

### Effects of the Invention

As has been described hereinbefore, according to the invention as set forth in Claim 1, there are mounted on the front wheel two front wheel brakes of which a first front wheel brake is connected directly with the master cylinder and the other front wheel brake is connected with the master cylinder through pressure control means for changing a liquid pressure transmission ratio in accordance with the output liquid pressure of the master cylinder. As a result, the front wheel braking force distribution can be changed according to the output liquid pressure from the master cylinder.

According to the invention as set forth in Claim 2, in addition to the construction of the invention as set forth in Claim 1, the pressure control means can be switched between a state, in which it intercepts the liquid pressure transmission when the output liquid pressure of the master cylinder is lower than a predetermined level, and a state in which it transmits the liquid pressure when the output liquid pressure of the master cylinder is equal to or higher than the predetermined level. As a result, a necessary braking force can be obtained by rendering the other front wheel brake unactuated to relatively weaken the front wheel braking force, when the output liquid pressure of the master cylinder is relatively low, by actuating all the front wheel brakes when the output liquid pressure of the master cylinder is relatively high.

According to the invention as set forth in Claim 3, in addition to the construction of the invention as set forth in Claim 1 or 2, one of the front wheel brake is equipped with a secondary master cylinder for establishing a liquid pressure by a brake reaction to be generated in response to the action of the front wheel brake, and the secondary master cylinder is connected with the rear wheel brake. As a result, the rear wheel brake can be associatively actuated in response to the braking action of the front wheel brakes.

Summarized the purpose of the present invention is to change the front wheel braking force distribution of a brake system for a motorcycle, in which a common master cylinder is connected with both a front wheel brake to be mounted on the front wheel and a rear wheel brake to be mounted on the rear wheel, in accordance with the output liquid pressure of the master cylinder.

A front wheel is equipped with two front wheel brakes B_{F1} and B_{F2}. A master cylinder M_{P} is connected directly with one front wheel brake B_{F1} and is connected with the other front wheel brake B_{F2} through pressure control means 8 for changing the liquid pressure transmission ratio in accordance with the output liquid pressure of the master cylinder M_{P}.

## Claims

1. A brake system for a motorcycle, comprising first and second master cylinders (M_{L}, M_{P}) wherein the first master cylinder (M_{L}) is connected with a first and a second front wheel brake (B_{F1} and B_{F2}) to be mounted on a front wheel (W_{F}) and the second master cylinder (M_{P}) is connected with the first and second front wheel brake (B_{F1} and B_{F2}) to be mounted on the front wheel (W_{F}) and with a rear wheel brake (B_{R}) to be mounted on a rear wheel (W_{R}),
**characterized in that** the first front wheel brake (B_{F1}) is directly connected with the second master cylinder (M_{P}) and the second front wheel brake (B_{F2}) is connected with the second master cylinder (M_{P}) through pressure control means (8) for transmitting an output liquid pressure of the second master cylinder (M_{P}) only when the output liquid pressure of the second master cylinder (M_{P}) exceeds a predetermined level, so that a liquid pressure distribution ratio at the front wheel side is changed.

2. A motorcycle brake system as set forth in Claim 1, **characterized in that** said pressure control means (8) switches between a state in which it intercepts the liquid pressure transmission when the output liquid pressure of the second master cylinder (M_{P}) is lower than a predetermined level, and a state in which it transmits a liquid pressure when the output liquid pressure of the second master cylinder (M_{P}) is equal to or higher than the predetermined level.

3. A motorcycle brake system as set forth in Claim 1 or 2, **characterized in that** the first front wheel brake (B_{F1}) is connected to the first master cylinder (M_{S}) for establishing a liquid pressure by a brake reaction to be established in response to the action of said front wheel brake (B_{F1}); and **in that** said first master cylinder (M_{S}) is connected with the rear wheel brake (B_{R}).

## Patentansprüche

1. Bremssystem für ein Motorrad, umfassend einen ersten und einen zweiten Hauptzylinder (M_{L}, M_{P}), wobei der erste Hauptzylinder (M_{L}) mit einer ersten und einer zweiten an einem Vorderrad (W_{F}) anzubringenden Vorderradbremse (B_{F1} und B_{F2}) verbunden ist und wobei der zweite Hauptzylinder (M_{P}) mit der ersten und der zweiten an dem Vorderrad (W_{F}) anzubringenden Vorderradbremse (B_{F1} und B_{F2}) und mit einer an einem Hinterrad (W_{R}) anzubringenden Hinterradbremse (B_{R}) verbunden ist,
**dadurch gekennzeichnet, dass** die erste Vorderradbremse (B_{F1}) direkt mit dem zweiten Hauptzylinder (M_{P}) verbunden ist und dass die zweite Vorderradbremse (B_{F2}) mit dem zweiten Hauptzylinder (M_{P}) durch ein Drucksteuer/regelmittel (8) verbunden ist, um einen Ausgabeflüssigkeitsdruck des zweiten Hauptzylinders (M_{P}) nur dann zu übertragen, wenn der Ausgabeflüssigkeitsdruck des zweiten Hauptzylinders (M_{P}) ein vorbestimmtes Niveau übersteigt, sodass ein Flüssigkeitsdruckverteilungsverhältnis an der Vorderradseite geändert wird.

2. Motorradbremssystem nach Anspruch 1, **dadurch gekennzeichnet, dass** das Drucksteuer/regelmittel (8) zwischen einem Zustand, in welchem es die Flüssigkeitsdruckübertragung unterbricht, wenn der Ausgabeflüssigkeitsdruck des zweiten Hauptzylinders (M_{P}) niedriger als ein vorbestimmtes Niveau ist, und einem Zustand schaltet, in welchem es einen Flüssigkeitsdruck überträgt, wenn der Ausgabeflüssigkeitsdruck des zweiten Hauptzylinders (M_{P}) gleich oder höher als das vorbestimmte Niveau ist.

3. Motorradbremssystem nach Anspruch 1 oder 2, **dadurch gekennzeichnet, dass** die erste Vorderradbremse (B_{F1}) mit dem ersten Hauptzylinder (M_{S}) verbunden ist, um einen Flüssigkeitsdruck durch eine Bremsreaktion zu erzeugen, die in Reaktion auf die Wirkung der Vorderradbremse (B_{F1}) zu erzeugen ist; und dass der erste Hauptzylinder (M_{S}) mit der Hinterradbremse (B_{R}) verbunden ist.

## Revendications

1. Système de freinage pour motocycle, comprenant un premier et un second maîtres-cylindres (M_{L}, M_{P}) dans lequel le premier maître-cylindre (M_{L}) est connecté à un premier et à un second freins de roue avant (B_{F1}, B_{F2}) destinés à être montés sur une roue avant (W_{F}) et le second maître-cylindre (M_{P}) est connecté au premier et second freins de roue avant (B_{F1} et B_{F2}), destinés à être montés sur la roue avant (W_{F}) ainsi qu'à un frein de roue arrière (B_{R}) destiné à être monté sur une roue arrière (W_{R}),
**caractérisé en ce que** le premier frein de roue avant (B_{F1}) est directement connecté au second maître-cylindre (M_{P}) et **en ce que** le second frein de roue avant (B_{F2}) est connecté au second maître-cylindre (M_{P}) par l'intermédiaire d'un moyen (8) de commande de la pression destiné à transmettre une pression hydraulique de sortie du second maître-cylindre (M_{P}) uniquement lorsque la pression hydraulique de sortie du second maître-cylindre (M_{P}) dépasse un niveau prédéterminé, de façon telle que le rapport de répartition de la pression hydraulique appliquée côté roue avant est modifié.

2. Système de freinage pour motocycle selon la revendication 1, **caractérisé en ce que** ledit moyen (8) de commande de la pression opère une commutation entre un état dans lequel il interrompt la transmission de la pression hydraulique lorsque la pression hydraulique de sortie du second maître-cylindre (M_{P}) est inférieure à un niveau prédéterminé, et un état dans lequel il transmet une pression hydraulique lorsque la pression hydraulique de sortie du second maître-cylindre (M_{P}) est égale ou supérieure au niveau prédéterminé.

3. Système de freinage pour motocycle tel qu'exposé dans la revendication 1 ou 2, **caractérisé en ce que** le premier frein de roue avant (B_{F1}) est connecté au premier maître-cylindre (M_{S}) en vue d'établir une pression hydraulique par l'effet d'une réaction de freinage qui doit être établie en réponse à l'action dudit frein de roue avant (B_{F1}), et **en ce que** ledit premier maître-cylindre (M_{S}) est connecté au frein de roue arrière (B_{R}).
